# EUROPEAN PATENT APPLICATION

(11) **EP 2 306 385 A1**
(43) Date of publication of application: **06.04.2011**
(21) Application number: 10179550.8
(22) Date of filing: 24.09.2010
(51) Int. Cl.: G06Q 10/00

(54) **Email management apparatus, multi function peripheral, and method of communicating emails**

(30) Priority: 28.09.2009 JP 2009222222
(71) Applicant: Oki Data Corporation, Tokyo 108-8551 (JP)
(72) Inventor: Watanabe, Yuichi, Tokyo 108-8551 (JP)
(74) Representative: Piotrowicz, Pawel Jan Andrzej

(57) **Abstract**

An email management apparatus manages emails. An email receiving section (14) receives an email via a network. A separating section (16) separates the email into an attachment and an email text. The separating section (16) produces attachment data based on the attachment and email text data based on the email text. An associating section (19) associates the email data with the attachment data.

## Description

### BACKGROUND OF THE INVENTION

### FIELD OF THE INVENTION

The present invention relates to an email management apparatus, a complex apparatus, and a communication method associated with the assortment and classification of emails received via a network.

### DESCRIPTION OF THE RELATED ART

Existing document sharing systems automate email management, report management, and content management in a well organized manner. One such system is disclosed in Japanese Patent application Laid-Open No. 10-301941. Specifically, the system includes a database that stores classes associated respective document information and a destination information database that stores destination information that correlates information on document text attribute with its destination. The document information received via the email management is automatically registered. The document information is distributed to a prescribed destination based on the destination information stored in the destination information database.

The system disclosed in Japanese Patent Application Laid-Open No. 10-301941 is configured so that only information on the email text contained in an email is managed as attribute information and the email in the as-is status is transferred to a management server. Thus, if an email is accompanied by an attachment, the email text and the attachment may not be managed separately. There exists the need for an improved email management apparatus.

### SUMMARY OF THE INVENTION

The present invention was made in view of the aforementioned drawbacks.

An object of the invention is to provide an email management apparatus, a multi function peripheral, and a communication method in which the email text and attachment of an email received via a network are managed separately so that the email text and the attachment can be searched independently for improved convenience to the users.

An email management apparatus manages emails. An email receiving section (14) receives an email via a network. A separating section (16) separates the email into an attachment and an email text. The separating section produces attachment data based on the attachment and email text data based on the email text. An associating section (19) associates the email data with the attachment data.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 illustrates an exemplary configuration of a network system;
Fig. 2A is a functional block diagram illustrating the overall configuration of an email management apparatus according to a first embodiment;
Fig. 2B is a block diagram illustrating a pertinent portion of the email management apparatus according to a first embodiment;
Fig. 3 is a block diagram illustrating an email parser;
Fig. 4 illustrates the configuration of folders defined in a server to which data associated with the email is transmitted;
Fig. 5 illustrates an exemplary configuration of a text information table according to the first embodiment;
Fig. 6 illustrates an exemplary configuration of an attachment information table according to the first embodiment;
Fig. 7 is a flowchart illustrating the operation of the email management apparatus according to the first embodiment;
Fig. 8 is a block diagram illustrating the functionality of an email management apparatus that implements the functionality of a modification 1-1;
Fig. 9 illustrates an exemplary configuration of an open/unopen table;
Fig. 10 illustrates an exemplary configuration of an attachment information table according to the modification 1-1;
Fig. 11 illustrates the functionality of an email management apparatus that implements the functionality of a modification 1-2;
Fig. 12 illustrates an exemplary configuration of an attachment information table according to the modification 1-2;
Fig. 13 illustrates an exemplary configuration of a text information table according to the modification 1-3;
Fig. 14 illustrates an exemplary configuration of an attachment information table according to the modification 1-3;
Fig. 15A is a functional block diagrams illustrating an email management apparatus according to a second embodiment;
Fig. 15B is a block diagram illustrating a pertinent portion of the email management apparatus according to the second embodiment;
Fig. 16 is a flowchart illustrating the operation of the email management apparatus according to the second embodiment;
Fig. 17 illustrates an exemplary configuration of a network according to a third embodiment;
Fig. 18 is a perspective view of an multi function peripheral according to the third embodiment;
Fig. 19 is a functional block diagram of the multi function peripheral;
Fig. 20 is a block diagram illustrating an email parser of the multi function peripheral;
Fig. 21 illustrates the configuration of a folder created in the server which is the destination of the data associated with a received email;
Fig. 22 illustrates an exemplary configuration of a text information table according to the third embodiment;
Fig. 23 illustrates an exemplary configuration of the attachment information table according to the third embodiment;
Fig. 24 is a flowchart illustrating the operation of the email management apparatus according to the third embodiment;
Fig. 25 is a block diagram illustrating the functionality of the multi function peripheral that implements the functionality of a modification 2-1;
Fig. 26 illustrates an exemplary configuration of a open/unopen table;
Fig. 27 illustrates an attachment information table according to the modification 2-1;
Fig. 28 illustrates the functionality of a multi function peripheral that implements the functionality of a modification 2-2;
Fig. 29 illustrates an attachment information table according to a modification 2-2;
Fig. 30 illustrates a text information table of the modification 2-2;
Fig. 31 illustrates an attachment information table of the modification 2-2;
Fig. 32 is a functional block diagram illustrating a multi function peripheral according to a fourth embodiment; and
Fig. 33 is a flowchart illustrating the operation of the multi function peripheral according to a fourth embodiment.

### DETAILED DESCRIPTION OF THE INVENTION

Preferred embodiments according to the invention will be described with reference to the accompanying drawings. The invention is not limited to the preferred embodiments and may be modified appropriately within the scope of the invention.

### First Embodiment

A network according to a first embodiment is constituted of an email management apparatus, a server, and an information processing terminal such as a personal computer (PC), all being connected via a communication cable such as a local area network (LAN).

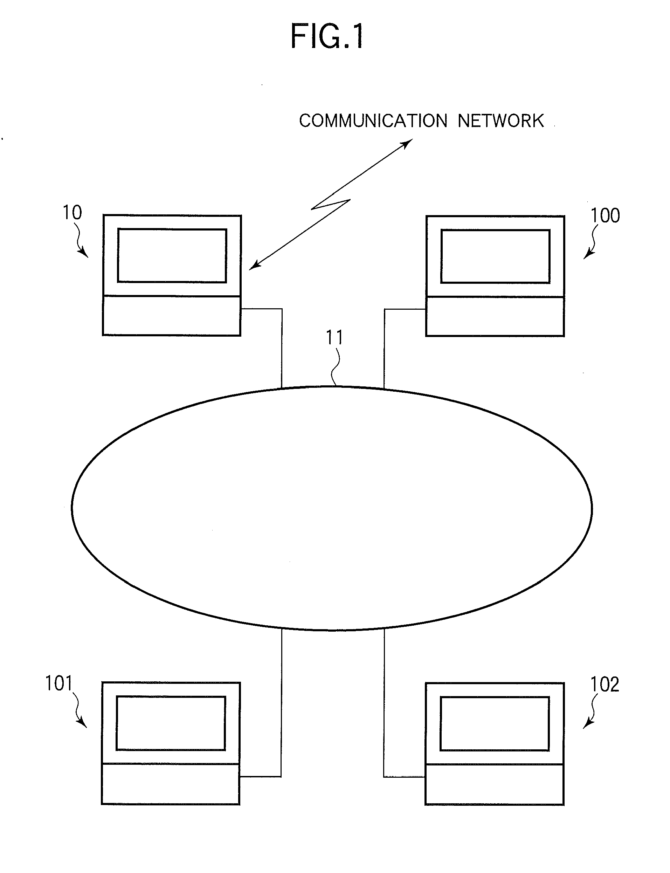

Fig. 1 illustrates an exemplary configuration of such a network system. The network system includes an email management apparatus 10 having a communication interface that may be connected to a communication network such as an Internet connection or a public switched telephone network and a network interface that may be connected to a LAN cable 11. A server 100 stores data received from the email management apparatus 10, and a PC 101 or a PC 102 communicates the emails with the email management apparatus 10.

The email management apparatus 10 may receive emails from the PC 101 or PC 102 via the communication network or the LAN cable 11. The email management apparatus 10 may also transfer the data associated with the received emails to the server 100.

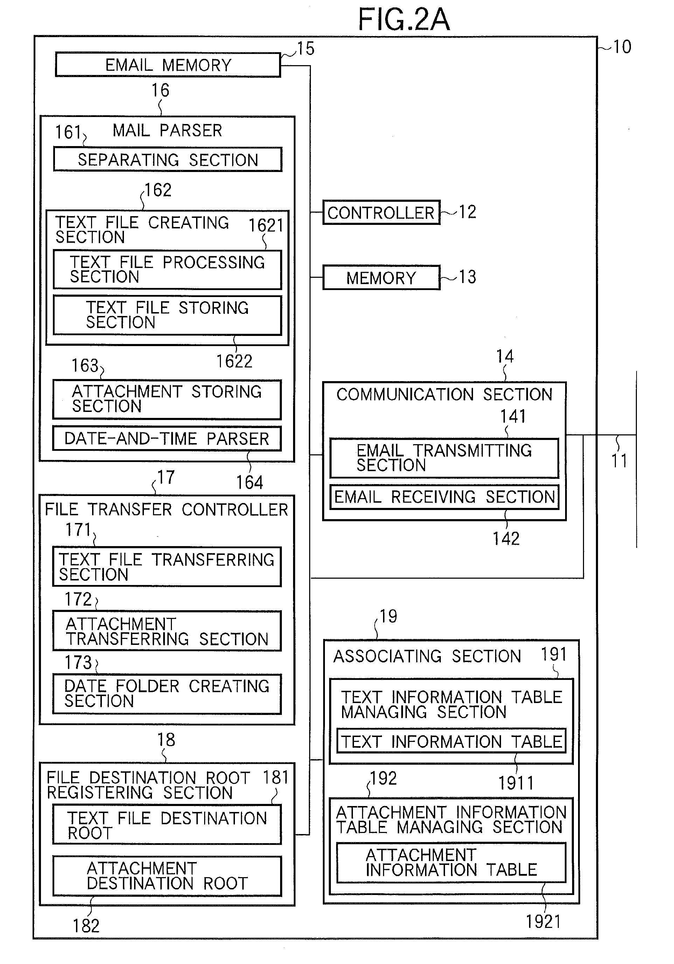

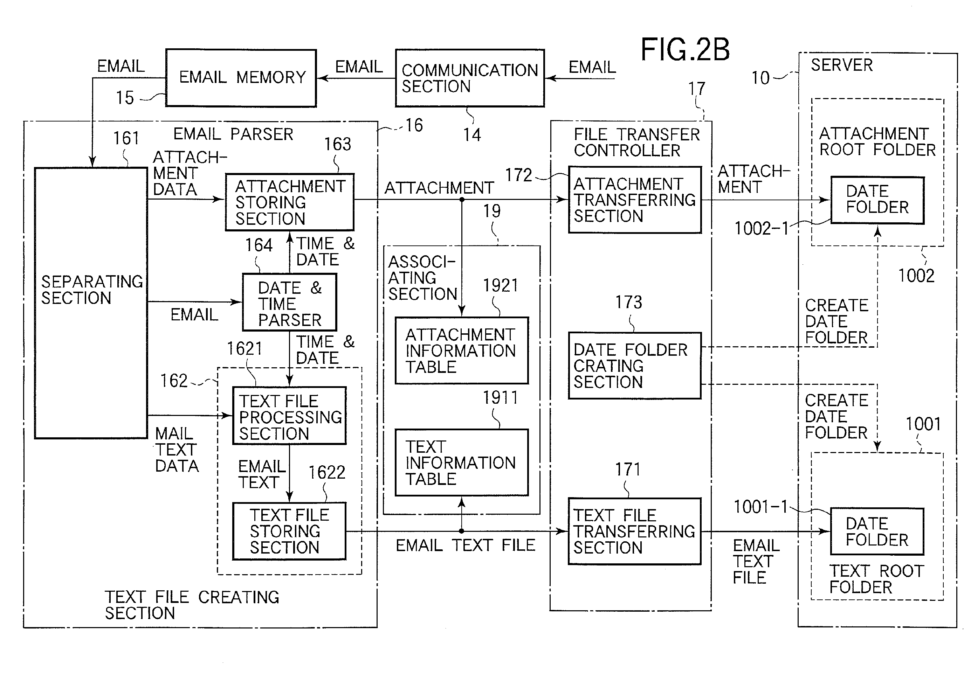

The email management apparatus 10 that performs the above-described functions will now be described with reference to Figs. 2-6.

Fig. 2A is a block diagram illustrating the email management apparatus 10.

The email management apparatus 10 includes a controller 12, a memory 13, a communication section 14 that receives emails, an email memory 15, an email parser 16 that separates an email into an email text and an attachment, a file transfer controller 17 that processes data, a file destination registering section 18, and an associating section 19 that correlates data.

The controller 12 includes a central processing unit (CPU) (not shown), and centrally controls the respective sections that constitute the email management apparatus 10.

The memory 13 may be implemented with a non-volatile memory device such as a read only memory (ROM) or a hard disk drive (HDD), and stores, for example, a control program executed by the CPU of the controller 12.

The communication section 14 includes a communication interface that may be connected to a communication network such as the Internet connection or the public switched telephone network (PSTN), and a network interface that may be connected to the LAN cable 11. The communication section 14 is capable of communicating a variety of data such as emails and image data via the LAN cable 11 or the communication network. In order to implement these functions, the communication section 14 is equipped with an email transmitting section 141 and an email receiving section 142 for communicating emails. The email receiving section 142 provides the received emails to the email memory 15.

The email memory 15 is implemented with a volatile memory such as a random access memory (RAM), and temporarily stores the received emails from the email receiving section 142.

Fig. 2B is a block diagram illustrating a pertinent portion of the email management apparatus according to the first embodiment.

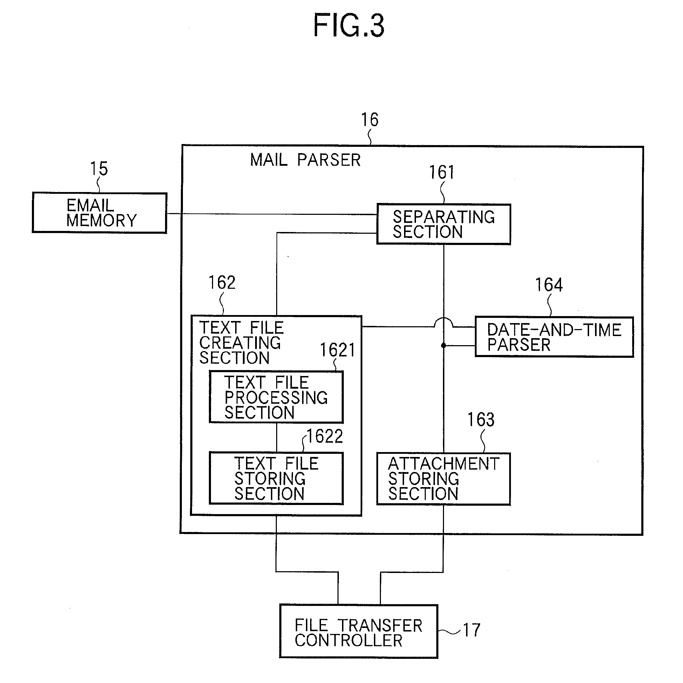

Fig. 3 is a block diagram illustrating the email parser 16.

Referring to Fig. 2A, Fig. 2B, and Fig. 3, the email parser 16 includes a separating section 161, a text file creating section 162, an attachment storing section 163, and a date-and-time parser 164. The email parser 16 reads the received email from the email memory 15 and separates the received email into the email text and the attachment.

The separating section 161 reads the received email from the email memory 15 and parses the data structure of the email, thereby determining whether the email is accompanied by an attachment. If the received email is accompanied by an attachment, the separating section 161 separates the email into email text data and attachment data.

The attachment storing section 163 temporarily stores the attachment data separated by the separating section 161.

The text file creating section 162 includes a text file processing section 1621 and a text file storing section 1622. The text file processing section 1621 produces an email text file from the email text data separated by the separating section 161. The text file storing section 1622 temporarily stores the email text file.

The date-and-time parser 164 parses the received email to obtain the date-and-time of reception of an email.

The file transfer controller 17 includes a text file transferring section 171, an attachment transferring section 172, and a date folder creating section 173.

The attachment transferring section 172 controls the transfer of the attachment from the attachment storing section 163 to the server 100. The text file transferring section 171 controls the transfer of the email text file from the text file storing section 1622 to the server 100.

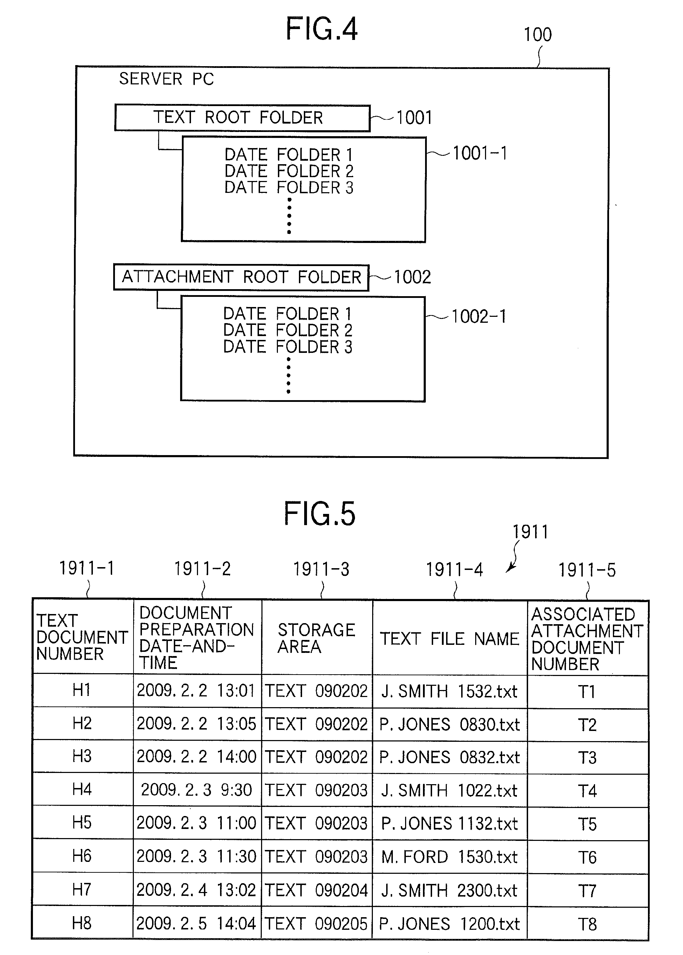

Fig. 4 illustrates the configuration of folders defined in the server 100 to which the data associated with the email is transmitted.

The text file transferring section 171 creates a text root folder 1001 in a memory (not shown) in the server 100. The date folder creating section 173 creates a date folder 1001-1 in the memory (not shown) on a date-by-date basis, the date folder 1001-1 being at a level below the text root folder 1001. The text file transferring section 171 transfers the email text file to the date folder 1001-1.

Just as the file transferring section 171, the attachment transferring section 172 creates an attachment root folder 1002 in the memory in the server 100. The date folder creating section 173 creates a date folder 1002-1 in the memory on a date-by-date basis, the date folder 1002-1 being at a level below the attachment root folder 1002. The attachment transferring section 172 transfers the attachment to the date folder 1002-1.

Referring to Fig. 2A, the file destination registering section 18 includes a text file destination root 181 and an attachment destination root 182. The file destination registering section 18 defines and creates a folder name and a root path for a root folder in accordance with a user' s command, the folder name and root path being the destinations of the email text file and the attachment. The root folder name as the destination of the email text file is "TEXT". The root folder name as the destination of the attachment is "ATTACHMENT".

Referring to Fig. 2A, the associating section 19 includes a text information table managing section 191 that performs list maintenance of information on the email text file in a text information table 1911, and an attachment information table managing section 192 that performs list maintenance of information on the attachment in an attachment information table 1921.

Fig. 5 illustrates an exemplary configuration of the text information table 1911.

The text information table 1911 has a plurality of fields of items of information for each email text file: a text document number 1911-1, a document preparation date-and-time 1911-2, a storage area 1911-3, a text file name 1911-4, and an associated attachment document number 1911-5. This configuration allows the user to know the correspondence of email text files and associated attachments.

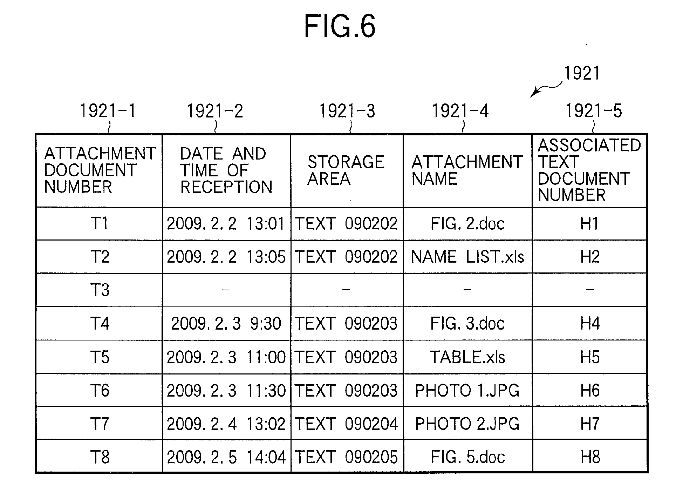

The number in the text document number 1911-1 is consecutively counted up every time a new email text file is added. The document preparation date-and-time 1911-2 stores the date and time information at which an email text file is created based on the received email. The storage area 1911-3 stores a name which is the combination of the date of reception of the email and a root folder name registered with the file destination registering section 18. For example, if an email is received on February 2, 2009, the storage area 1911-3 stores "TEXT 090202." The text file name 1911-4 holds the text file name assigned by the text file processing section 1621. In the first embodiment, the text file name is the name of a user who transmitted the email. The associated attachment document number 1911-5 and an attachment document number 1921-1 of the attachment information table 1921 (Fig. 6) hold an identical number for each email.

Fig. 6 illustrates an exemplary configuration of the attachment information table 1921 according to the first embodiment.

The attachment information table 1921 includes the following fields for each attachment: the attachment document number 1921-1, a time of reception 1921-2, a storage area 1921-3, an attachment name 1921-4, and an associated text document number 1921-5. This allows the user to know the relation between the attachment and text file without difficulty.

The number in the attachment document number 1921-1 is consecutively counted up every time a new attachment is added. The attachment document number 1921-1 and the associated attachment document number 1911-5 hold an identical document number for each email. The time of reception 1921-2 holds the date-and-time information at which the attachment is created. The storage area 1921-3 holds a name which is the combination of the date of reception of the email and a folder name registered with a file destination registering section 18. For example, if an email is received on February 2, 2009, the storage area 1911-3 stores "ATTACHMENT 090202." The attachment name 1921-4 holds the attachment name. The associated text document number 1921-5 holds the text document number 1911-1 of the text information table 1911. If a received email has no attachment, the associated text document number 1921-5 holds "0" which indicates that the email has no attachment.

### {Operation of Email Management Apparatus}

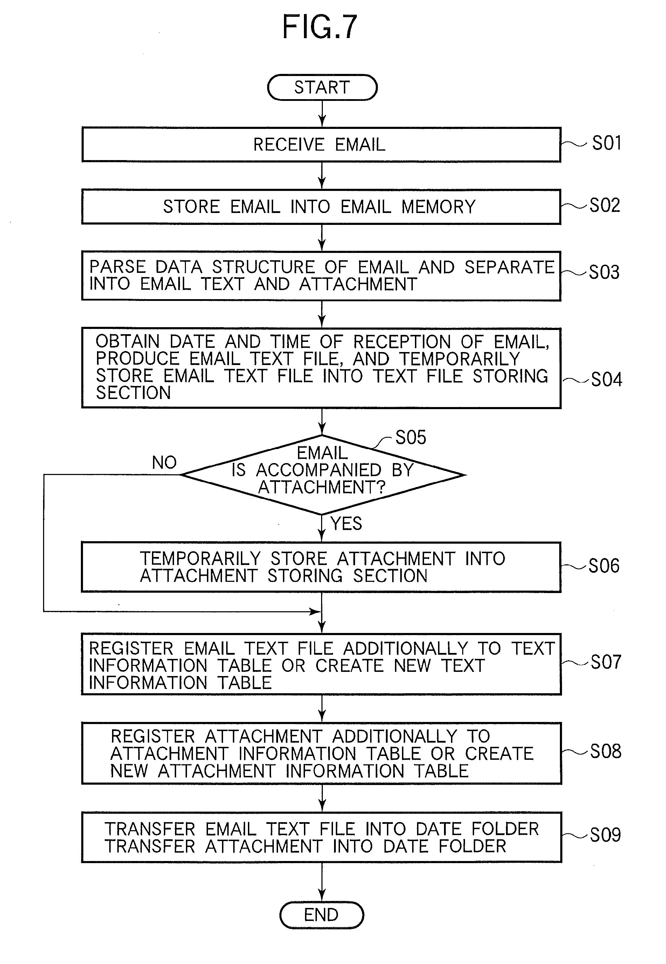

Fig. 7 is a flowchart illustrating the operation of the email management apparatus 10.

The operation of the email management apparatus 10 of the above-described configuration will be described with reference to Fig. 7 and also Fig. 2B, as required. A description will be given of a case in which an email is received, assuming that the server 100 has a destination root folder created therein. Here, the root folder name for the destination of the email text file is "TEXT" and the root folder name for the destination of the attachment is "ATTACHMENT".

After the email management apparatus 10 starts to receive an email receiving processing, the communication section 14 receives an email (S01) and then stores the received email into the email memory 15 (S02).

Once the received email has been stored in the email memory 15, the separating section 161 reads the email from the email memory 15 to parse the data structure of the email and check for an attachment. The separating section 161 separates the email into email text data and attachment data if the email is accompanied by an attachment (S03).

The date-and-time parser 164 obtains the date-and-time of reception of the received email (S04). The text file processing section 1621 produces an email text file and then temporarily stores the data-and-time information and the email text file (S04), which is assigned a corresponding text file name and date-and-time of reception, into the text file storing section 1622.

If the email has an attachment (YES at S05), the separating section 161 temporarily stores the date and time information and the attachment, together with the attachment name if assigned, into the attachment storing section 163 (S06).

The text information table managing section 191 creates the text information table 1911 based on the email text file, date and time of reception, and the root folder or the like of the registered destination which are all temporarily stored in the email text file storing section 1622 (S07).

Subsequently, the attachment information table managing section 192 additionally registers the attachment with the attachment information table 1921 or creates a new attachment information table 1921 based on the attachment, the date-and-time of reception, and the root folder of the registered destination which are all temporarily stored in the attachment storing section 163 (S08).

The date folder creating section 173 refers to the text information table 1911 to create, on a date-by-date basis, the date folder 1001-1 at a level below the text root folder 1001 created in the memory (not shown) of the server 100. Subsequently, the text file transferring section transfers the email text file into the date folder 1001-1. The date folder creating section 173 refers to the attachment information table 1921 to create, on a date-by-date basis, the date folder 1002-1 at a level below the attachment root folder 1002. The attachment transferring section 172 then transfers the attachment to the date folder 1002-1 (S09). The email management apparatus 10 thus completes the email receiving processing.

As described above, an email is separated into the email text file and the attachment, the email text file being stored into the date folder 1001-1 and the attachment being stored into the date folder 1002-1. Thus, the user can browse the text information table 1911 and the attachment information table 1921 using a browser or a file browsing function of the operating system (OS). Since the email text files and the attachments are arranged in the form of folders for each date, a user only needs to perform a search of the date folder 1001-1 to find an email text file or a search of the date folder 1002-1 to find an attachment. This increases the search speed of the email text files and the attachments. Conventionally, if a user remembers only a part of the file name, which is a "keyword", of the attachment, he cannot search for his desired attachment. Instead, a conventional apparatus requires the user to search the title or source name of the email, and then open the email to perform a search for an attachment. In contrast, the present embodiment is configured such that the date folder 1002-1 below the attachment root folder 1002 stores only the attachments; therefore the user can perform a search of the date folder to find his desired attachment using a part of the attachment name as a keyword.

### Modification 1-1

An email management apparatus 10-1 according to a modification 1-1 will be described which manages the opened/unopened status of attachments by the user and displays to the user the opened/unopened status of the attachments.

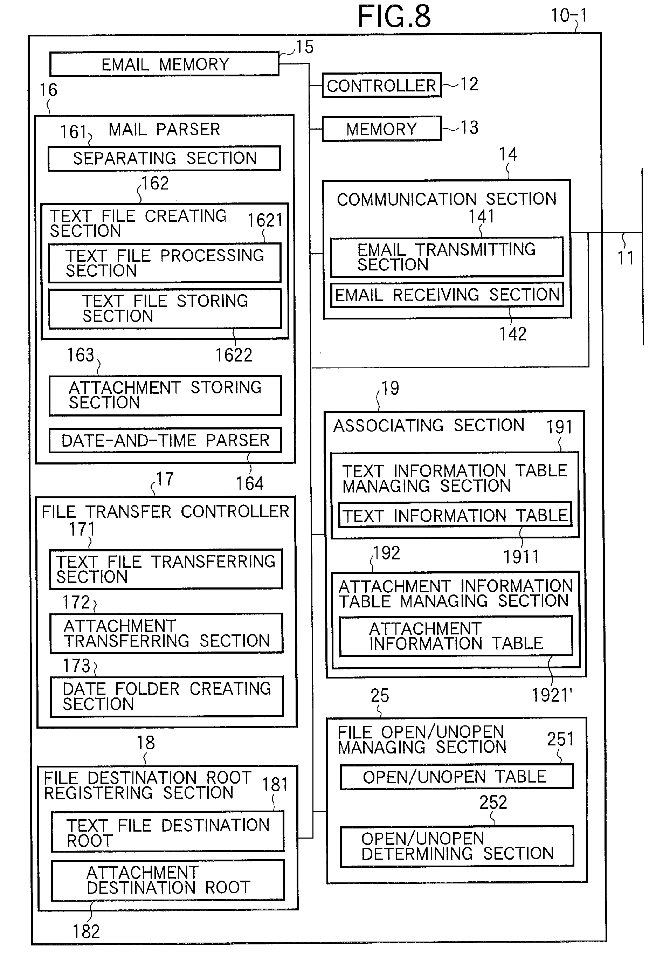

Fig. 8 is a block diagram illustrating the functionality of the email management apparatus 10-1 that implements the functionality of the modification 1-1.

The configuration of the email management apparatus 10-1 is the same as that of the email management apparatus 10. Elements similar to those of the first embodiment have been given the same reference numerals, and therefore a description will be given only of a portion different from the first embodiment. As is clear from Fig. 8, the email management apparatus 10-1 differs from the email management apparatus 10 in that a file open/unopen managing section 25 is employed.

The file open/unopen managing section 25 includes an open/unopen table 251 that represents the opened/unopened status of attachments, and an open/unopen determining section 252. The open/unopen determining section 252 refers to the open/unopen table 251 to determine the opened/unopened status an attachment, and then notifies the attachment information table managing section 192 of the opened/unopened status of attachments.

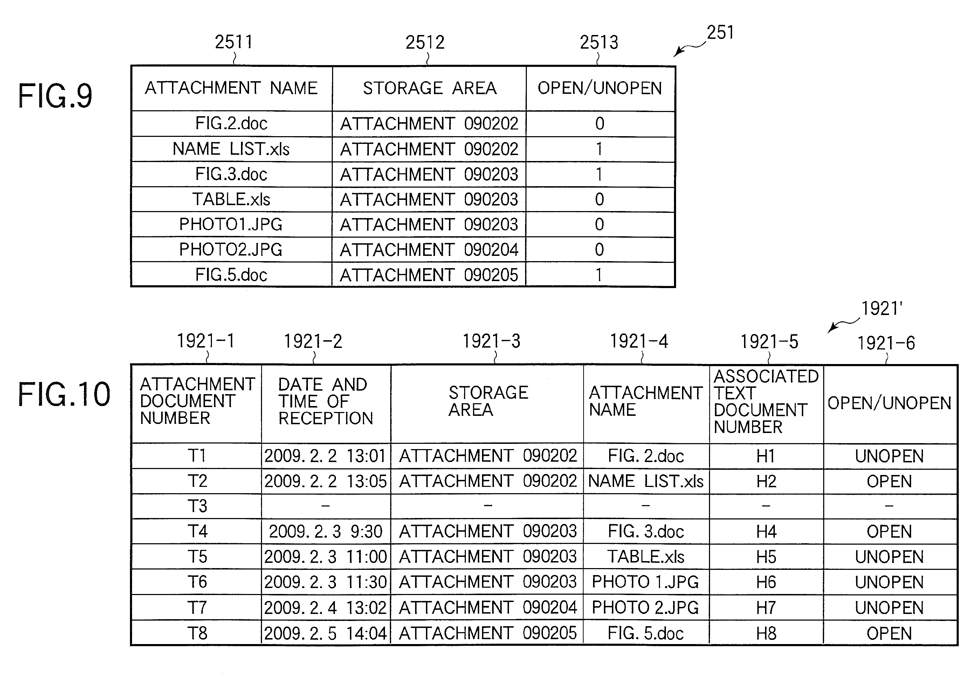

Fig. 9 illustrates an exemplary configuration of the open/unopen table 251.

The open/unopen table 251 includes the following fields: an attachment name 2511, a storage area 2512, and an open/unopen event 2513. The attachment name 2511 and the storage area 2512 correspond to the attachment name 1921-4 and storage area 1921-3, respectively, of the attachment information table 1921. The value in the open/unopen event 2513 indicates the opened/unopened status of attachments. When the user opens an attachment, the file open/unopen managing section 25 sets the value of the open/unopen event 2513 to 1. If an attachment has not been opened yet by the user, the value of the file open/unopen managing section 25 is 0.

If the value of the open/unopen event 2513 is 1, the open/unopen determining section 252 determines that the attachment has been opened by the user, and notifies the attachment information table managing section 192 of the attachment name 2511 and the storage area 2512 that correspond to the attachment.

Fig. 10 illustrates an exemplary configuration of an attachment information table according to the modification 1-1.

An attachment information table 1921' according to the modification 1-1 includes a field of an open/unopen event 1921-6. Upon reception of a notification from the open/unopen determining section 252, the attachment managing section 192 sets the open/unopen event 1921-6, which corresponds to the notified attachment name, to OPEN which indicates that the attachment has been opened. If no notification has been received from the open/unopen determining section 252, the open/unopen event 1921-6 remains UNOPEN which indicates that the attachment has not been opened yet.

As described above, the attachments that have not been opened by the user and those that have been opened may be highlighted by different colors or different background patterns instead of creating the open/unopen event 2513 in the attachment information table 1921, instead of creating the open/unopen event 1921-6. For example, attachments that have not been opened yet may be highlighted by a white area and those that have been opened already may be highlighted by a shaded area, so that the colors or patterns of the attachment names are changed according to the determination by the open/unopen determining section 252.

The modification 1-1 permits the user to browse the attachment information table 1921 to know whether attachments have been opened. Therefore, if the user wants to search attachments, he can select between the group of attachments that have been opened and the group of attachments that have not been opened yet, thereby narrowing down the search.

### Modification 1-2

An email management apparatus 10-2 according to a modification 1-2 will be described which manages the opened/unopened status of attachments and is capable of restricting the user's actions such as permission of opening of attachments, prohibition of the opening of attachments, warning indicative of unopened attachments, and the opening of a corresponding mail text.

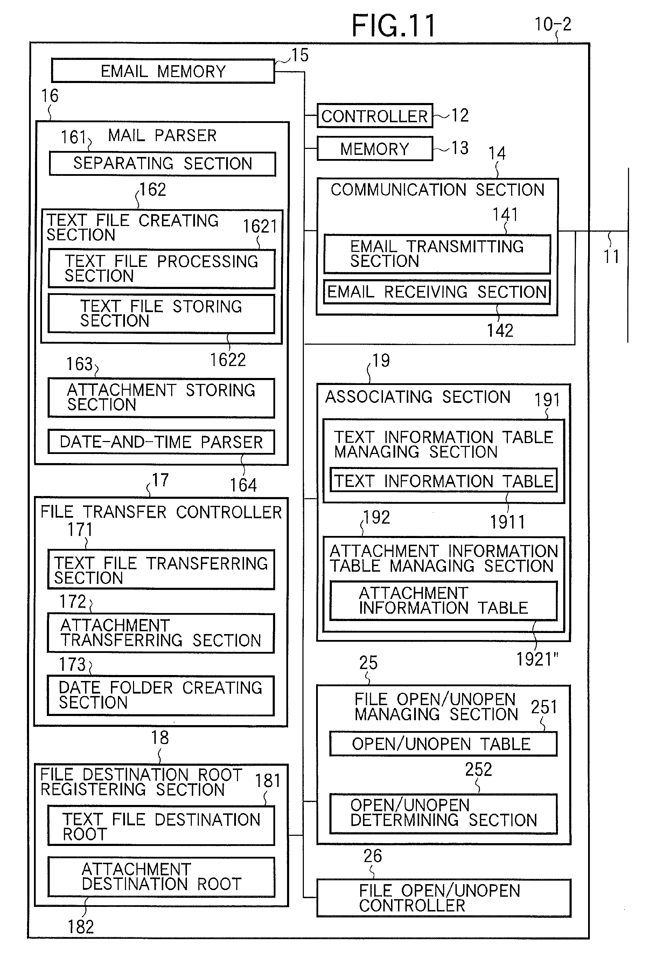

Fig. 11 illustrates the functionality of the email management apparatus 10-2 that implements the functionality of the modification 1-2.

A description will be given of portions different from the email management apparatus 10-1. Elements similar to those of the modification 1-1 have been given the same reference numerals and their description is omitted. Referring to Fig. 11, the email management apparatus 10-2 differs from the email management apparatus 10-1 in that a file open/unopen controller 26 is employed.

When the user attempts to open an attachment, the file open/unopen controller 26 inquires the open/unopen determining section 252 of the opening/closing status of the attachment. Then, the file open/unopen controller 26 restricts access to the attachment in accordance with the determination by the open/unopen determining section 252.

Specifically, upon reception of an inquiry from the file open/unopen controller 26, the open/unopen determining section 252 refers to the open/unopen table 251, thereby determining whether an attachment has been opened and then notifying the file open/unopen controller 26 of the determination. For example, if the value in the open/unopen event 2513 has been set to "1," the open/unopen determining section 252 determines that the attachment has been opened by the user and then notifies the file open/unopen controller 26 of the opening of the attachment. Upon reception of the notification, the file open/unopen controller 26 permits opening of attachment. If the value in the open/unopen event 2513 has been set to "0," the open/unopen determining section 252 determines that the attachment has not been opened yet, and then notifies the file open/unopen controller 26 of the non-opening of the attachment. Upon reception of the notification, the file open/unopen controller 26 may display to the user that the attachment has not been opened yet.

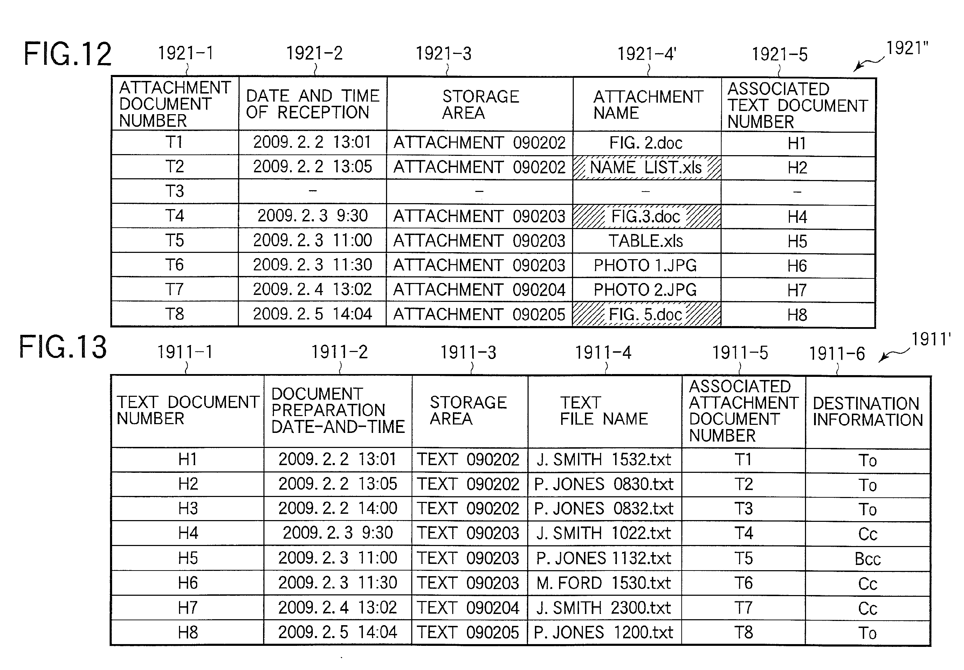

Fig. 12 illustrates an exemplary configuration of an attachment information table 1911" according to the modification 1-2.

The attachment information table 1921" may be configured such that the file open/unopen controller 26 may instruct the attachment information table managing section 192 to shade the attachment name of an attachment that has not opened yet. Alternately, for example, the file open/unopen controller 26 may instruct the attachment information table managing section 192 to forcibly open a corresponding email text file and refer to the text. Yet alternatively, the file open/unopen controller 26 may perform control to inhibit the opening of the attachment, in which case, if the corresponding email text file has been opened, a message "This attachment has not opened yet" may be displayed before permitting the opening of the attachment.

As described above, the modification 1-2 prevents an unopened attachment from being opened inadvertently. If the attachment is, for example, a hacker email accompanied by an executable attachment, the attachment may be prevented from being executed inadvertently. Since the modification 1-2 may help the user determine whether the attachment should be opened. Therefore, it may be helpful in determining whether the attachment is malicious.

### Modification 1-3

An email management apparatus 10-3 according to modification 1-3 will now be described which determines which of To, Cc, and Bcc the destination of an email is and causes the text information table or attachment information table 1921 to list these destinations.

The configuration of the email management apparatus 10-3 is substantially the same as that of the email management apparatus 10 according to the first embodiment, and its detailed description is omitted. The email parser section according to the modification 1-3 parses the destination information of a received email to determine which of To, Cc, and Bcc the destination of the received email is. Then, the email parser section notifies the text information table managing section and the attachment information table managing section of the determined destination.

Fig. 13 illustrates an exemplary configuration of a text information table according to the modification 1-3.

Upon reception of the notification, the text information table managing section creates a text information table 1911' that has a field of destination information 1911-6 in which one of To, Cc, and Bcc is entered.

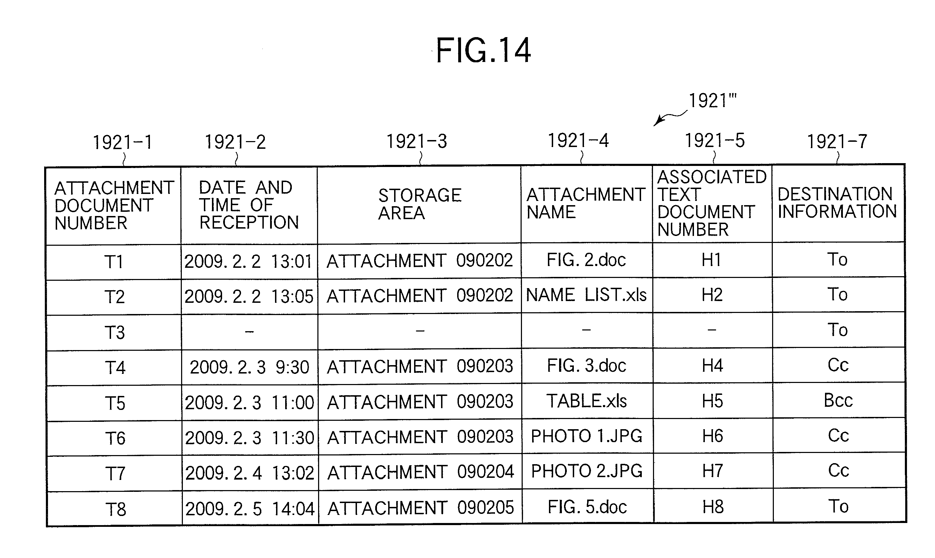

Fig. 14 illustrates an exemplary configuration of an attachment information table 1921"'.

The text information table managing section also creates the text information table 1921"' that has a field of destination information 1921-7 in which one of To, Cc, and Bcc is entered.

As described above, the modification 1-3 permits the user to know which of To, Cc, and Bcc the email accompanied by an attachment is set to. Therefore, it may be helpful in determining the type or importance of the attachment.

### Second Embodiment

The first embodiment has been described in terms of the server 100 on the network which is a storage destination of the email text file and the attachment separated from a received email. A second embodiment differs from the first embodiment in that a large capacity memory 20 is employed for storing email text files and attachments.

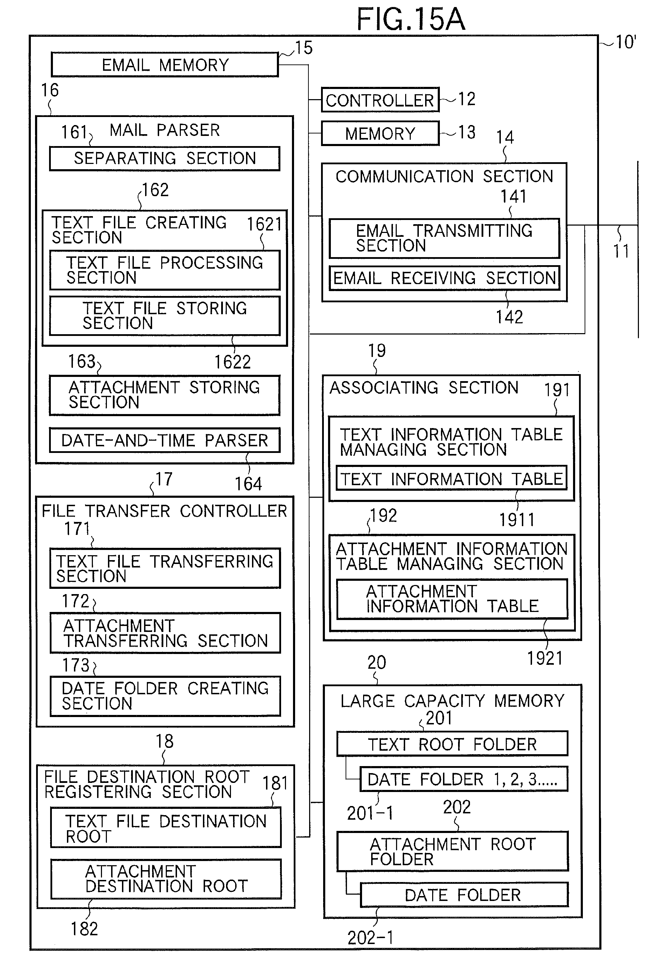

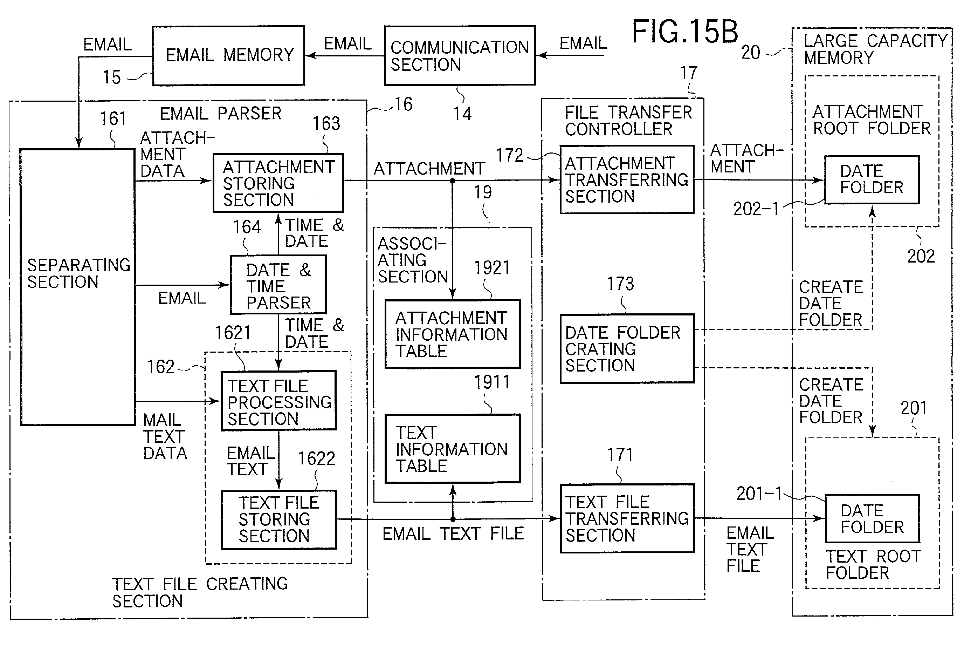

Fig. 15A and Fig. 15B are functional block diagrams illustrating an email management apparatus 10' according to the second embodiment. The configuration of the email management apparatus 10' is substantially the same as that of the email management apparatus 10 according to the first embodiment. Elements similar to those of the first embodiment have been given the same reference numerals and their description is omitted. As is clear from Fig. 15, the email management apparatus 10' includes the large capacity memory 20 in addition to the configuration of the email management apparatus 10 according to the first embodiment.

The large capacity memory 20 is implemented with a non-volatile memory (e.g., an HDD), and has the same configuration as the server 100 according to the first embodiment. The large capacity memory 20 includes a text root folder 201 which is the destination of an email text file, a date folder 201-1 created at a level below the text root folder 201 by a date folder creating section 173, an attachment root folder 202 which is the destination of an attachment, and a date folder 202-1 created at a level below the attachment root folder 202 by the date folder creating section 173.

The email management apparatus 10' is capable of managing the email text files and associated attachments without the need for an outer server.

### {Operation of Email Management Apparatus}

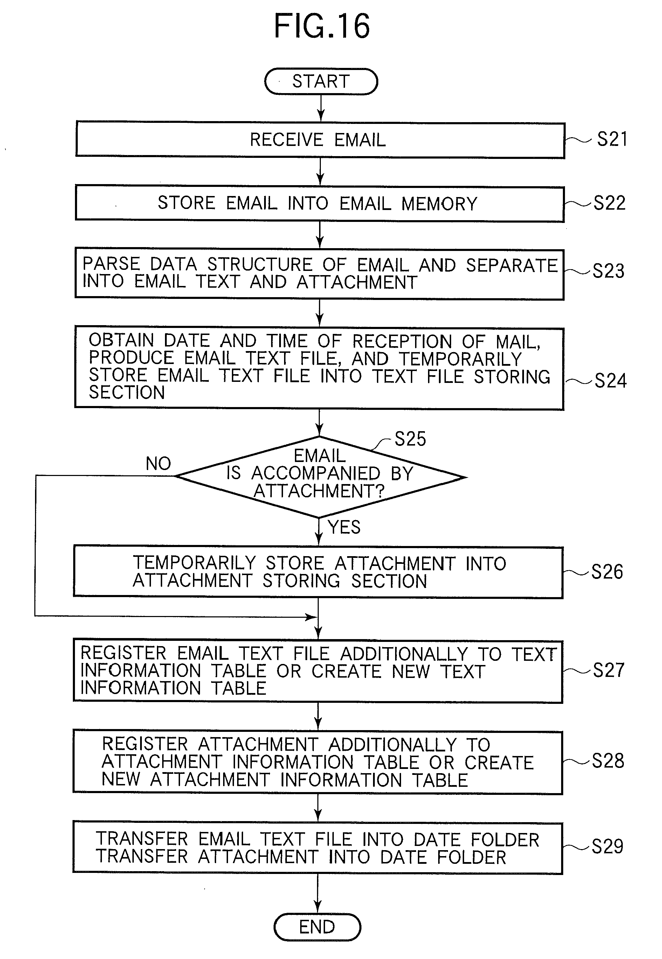

The operation of the email management apparatus 10' with the above-described configuration will be described with reference to Fig. 16 and Fig. 15B. The second embodiment will be described with respect to a case in which an email is received, assuming that the name of a file destination root folder has been registered in the large capacity memory 20 (for example, the destination of the email text files is "TEXT" and the destination of the attachment is "ATTACHMENT")

Fig. 16 is a flowchart illustrating the operation of the email management apparatus 10'.

Once the email management apparatus 10' begins to receive an email, an email receiving section 142 of a communication section 14 receives an email (S21) and stores the received email into an email memory 15 (S22).

Once the received email has been stored into the email memory 15, a separating section 161 of an email parser 16 (Fig. 15) reads the email from the email memory 15 and parses the data structure of the email, thereby determining whether the received email is accompanied by an attachment and then separating the email into email text data and attachment data if the email is accompanied by an attachment (S23).

A date-and-time parser 164 obtains the date and time of reception of an email. The text file processing section 1621 of the text file creating section 162 produces an email text file and then temporarily and then attaches a text file name to the email text file, and then temporarily stores them into the text file storing section 1622 (S24).

When an email is accompanied by an attachment (YES at S25), the separating section 161 temporarily stores the attachment together with the date and time obtained by the date-and-time parser 164 into an attachment storing section 163. If the attachment has already been assigned its attachment name, the attachment is stored with that attachment name (S26).

The text information table managing section 191 of an associating section 19 (Fig. 15A) additionally registers the email text file with the text information table 1911 or creates a new text information table 1911 based on the email text file, the date and time of reception of the email, and the root folder of a registered destination which are temporarily stored in the text file storing section 1622 (S27).

The attachment information table managing section 192 of the associating section 19 (Fig. 15A) then additionally registers the attachment with the attachment information table 1921 or creates a new attachment information table based on the date and time of reception of the email and the root folder of a registered destination which are temporarily stored in the attachment storing section 163 (S28).

The date folder creating section 173 of the file transfer controller 17 (Fig. 15A) refers to the text information table 1911 and creates the date folder 201-1 on a date-by-date basis at a level below the text root folder 201 in the large capacity memory 20. A text file transferring section 171 then transfers the email text file to the date folder 201-1. The date folder creating section 173 refers to the attachment information table 1921 and creates, on a date-by-date basis, the date folder 202-1 at a level below the attachment root folder 202 in the large capacity memory 20. An attachment transferring section 172 then transfers the attachment to the created date folder 202-1 (S29). Thus, the email management apparatus 10' completes the email receiving processing.

As described above, the email management apparatus according to the second embodiment performs the management of the email text files and attachments without the need for an external server, improving convenience of the user.

The second embodiment may also employ the configurations of the modifications 1-1, 1-2, and 1-3 of the first embodiment. Employing the configurations of these modifications provides additional effects derived from these modifications 1-1, 1-2, and 1-3.

### Third Embodiment

A third embodiment is directed to a network system in which a multi function peripheral (MFP), a server, and information processing terminals, for example, personal computers (PC) are connected to one another via a communication cable, for example, a LAN.

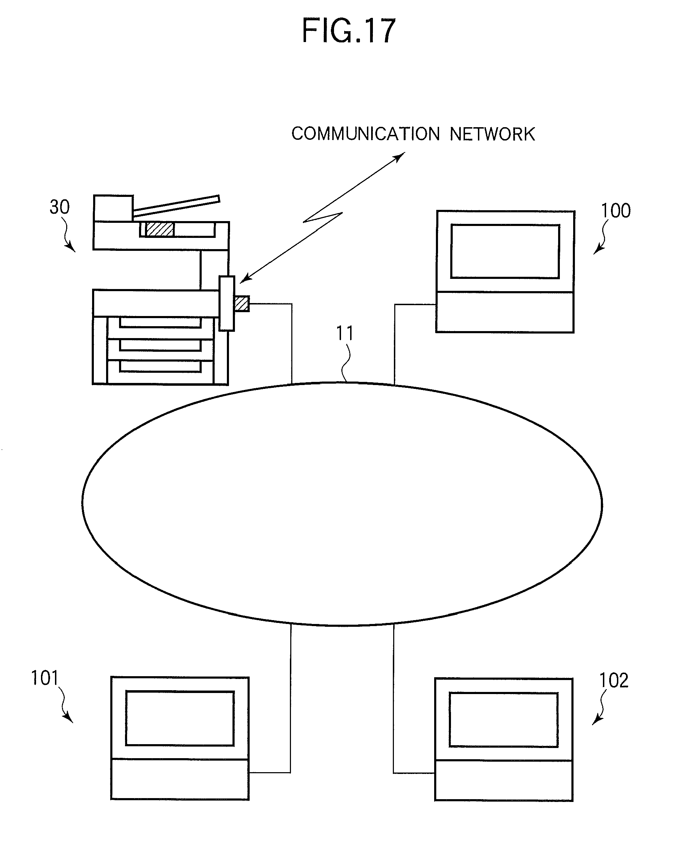

Fig. 17 illustrates an exemplary configuration of the network according to the third embodiment.

The network system includes, for example, a multi function peripheral (MFP) 30 including a communication interface that can be connected to a communication network and a network interface that can be connected to a LAN cable 11, a server 100 that stores the data received from the MFP 30, and a PC 101 or a PC 102 that communicate emails with the MFP 30.

The MFP 30 according to the third embodiment is a so-called multi function peripheral, and is constituted of a scanner, a copying machine, a printer, and a facsimile machine, and performs a function of automatically transferring emails. The MFP 30 also performs a function of receiving image data and transmitting the received image data, a function of printing and transferring received emails accompanied by attachments, and a function of receiving emails from a PC 101 or a PC 102 via the LAN cable 11 and transmitting the data associated with received emails to the server 100.

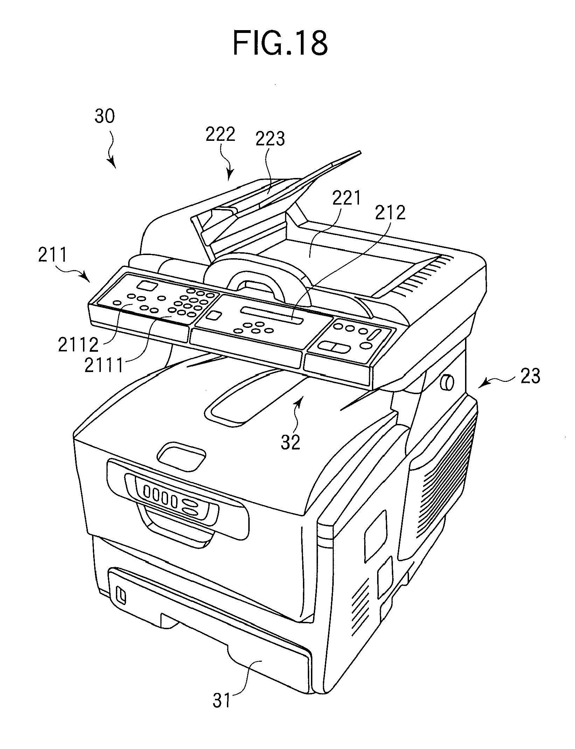

The MFP 30 will be described with reference to Figs. 18-23.

Elements similar to those of the first embodiment have been given the same reference numerals and their detailed description is omitted.

Fig. 18 is a perspective view of a multi function peripheral (MFP) 30 according to the third embodiment.

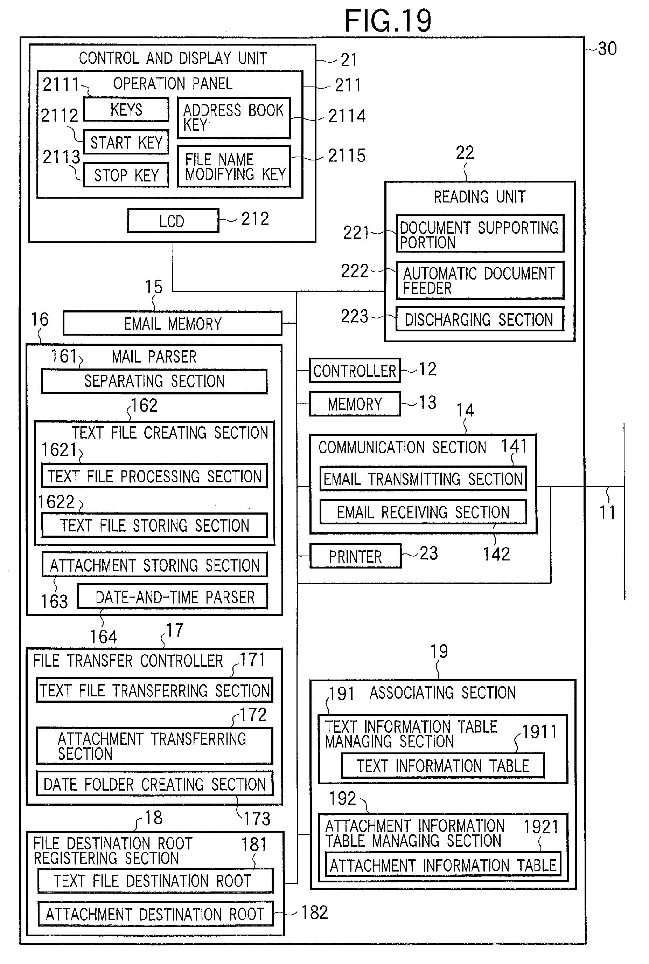

Fig. 19 is a functional block diagram of the MFP 30.

The MFP 30 includes a controller 12, a memory 13, a communication section 14 that receives emails, an email memory 15, the email parser 16, and a file transfer controller 17, a file destination registering section 18, an associating section 19, a control and display unit 21, a reading section 22, and a printing section 23.

The controller 12 includes, for example, a central processing unit (CPU) (not shown), and centrally controls the respective sections of the MFP 30.

The memory 13 is a non-volatile memory such as a read only memory (ROM) or a hard disk drive (HDD), and stores control programs executed by the CPU of the controller 12.

The communication section 14 includes, for example, the communication interface that can be connected to a communication network such as an Internet connection, a public switched telephone network (PSTN), or the network interface that may be connected to the LAN cable 11, and is capable of communicating a variety of data including image data and emails over the communication network or the LAN cable 11. The communication section 14 includes an email transmitter 141 and an email receiver 142 which are involved in the transmission and reception of emails, respectively. The email receiver 142 provides the received emails to the email memory 15.

The email memory 15 may be implemented with a volatile memory device, for example, a random access memory (RAM), and temporarily stores the received emails.

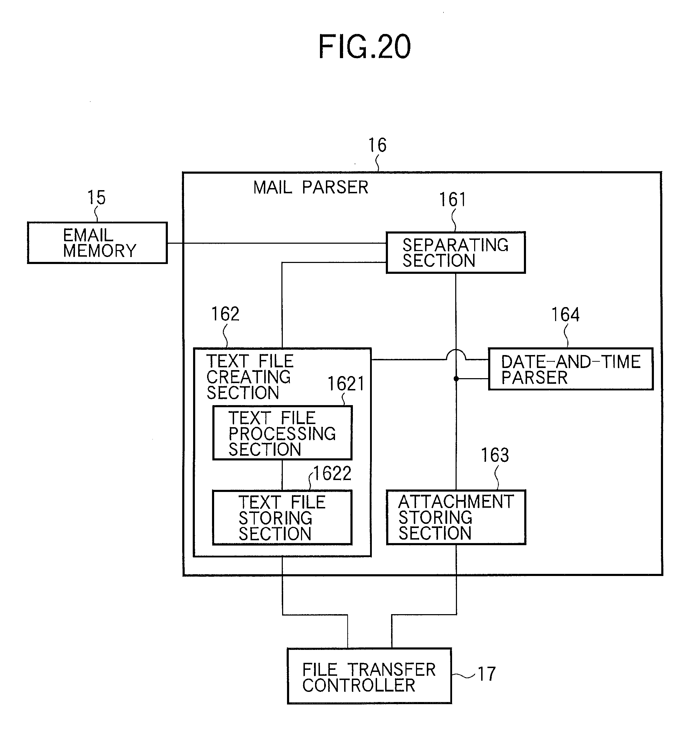

Fig. 20 is a block diagram illustrating an email parser 16 of the MFP 30.

The email parser 16 includes a separating section 161, a text file creating section 162, an attachment storing section 163, and a date-and-time parser 164. The email parser 16 reads the received emails from the email memory 15, and separates the received email into an email text and an attachment.

The separating section 161 reads the received email from the email memory 15 and parses the data structure of the email, thereby determining whether the email is accompanied by an attachment. If the email is accompanied by an attachment, the separating section 161 separates the email into email text data and attachment data.

The text file creating section 162 includes a text file processing section 1621 and a text file storing section 1622. The text file processing section 1621 produces an email text file from the email text data separated by the separating section 161, and temporarily stores the email text file into the text file storing section 1622.

The attachment storing section 163 temporarily stores the attachment data as an attachment.

The date-and-time parser 164 parses the received email to obtain the date and time of reception.

Referring back to Fig. 19, the file transfer controller 17 includes a text file transferring section 171, an attachment transferring section 172, and a date folder creating section 173. The text file transferring section 171 controls the transfer of the email text file stored in the text file storing section 1622 to the server 100.

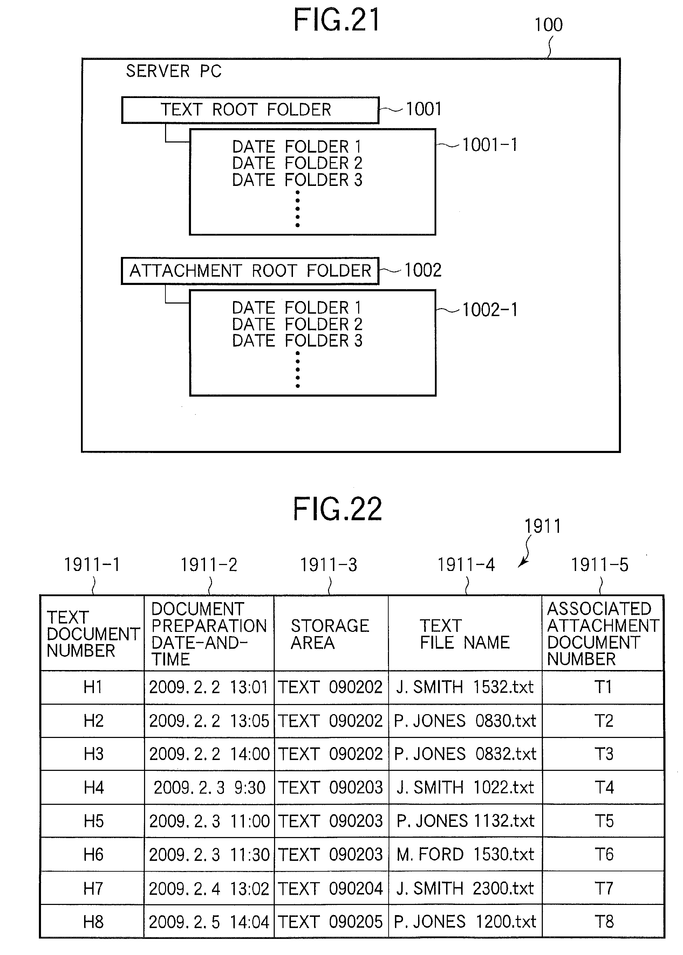

Fig. 21 illustrates the configuration of a folder created in the server 100 which is the destination of the data associated with the email.

The text file transferring section 171 causes the server 100, which is the destination of the email text file, to create a text root folder 1001 in a memory (not shown) of the server 100, and then transfers the email text file to a data folder 1001-1.

The attachment transferring section 172 causes the server 100, which is the destination of the attachment, to create an attachment root folder 1002 in the memory (not shown) of the server 100, and transfers the attachment to a data folder 1002-1.

The date folder creating section 173 creates, on a date-by-date basis, the data folder 1001-1 at a level below the level below the text root folder 1001.

The date folder creating section 173 also creates, on a date-by-date basis, the date folder 1002-1 at a level below the level below the attachment root folder 1002.

Referring back to Fig. 19, the file destination registering section 18 includes a text file destination root 181 and an attachment destination root 182. In response to the user's command, the file destination registering section 18 defines and registers folder names for root folders to which the email text file and the attachment are to be transferred. The root folder name for the destination of the email text file is "TEXT." The root folder name for the destination of the attachment is "ATTACHMENT."

The associating section 19 includes a text information table managing section 191, and an attachment information table managing section 192.

The text information table managing section 191 performs list maintenance of the information on the email text file in a text information table 1911.

Fig. 22 illustrates an exemplary configuration of the text information table.

The text information table 1911 contains a plurality of items of information for each email text file: a text document number 1911-1, a document preparation date-and-time 1911-2, a storage area 1911-3, a text file name 1911-4, and an associated attachment document number 1911-5. This configuration allows the user to know the association between the email text files and associated attachments.

The number in the text document number 1911-1 is consecutively counted up every time a new email text file is added to the text information table 1911. The document preparation date-and-time 1911-2 stores the date and time at which the email text file is created based on the received email. The storage area 1911-3 stores a name which is the combination of the date of reception of an email and a root folder name registered with the file destination registering section 18. For example, if an email is received on February 2, 2009, the storage area 1911-3 stores "TEXT 090202." The text file name assigned by the text file processing section 1621 is registered with the text file name 1911-4. In the third embodiment, the text file name is the name of a user who transmitted the email. The associated attachment document number 1911-5 holds an attachment document number 1921-1 of an attachment information table 1921.

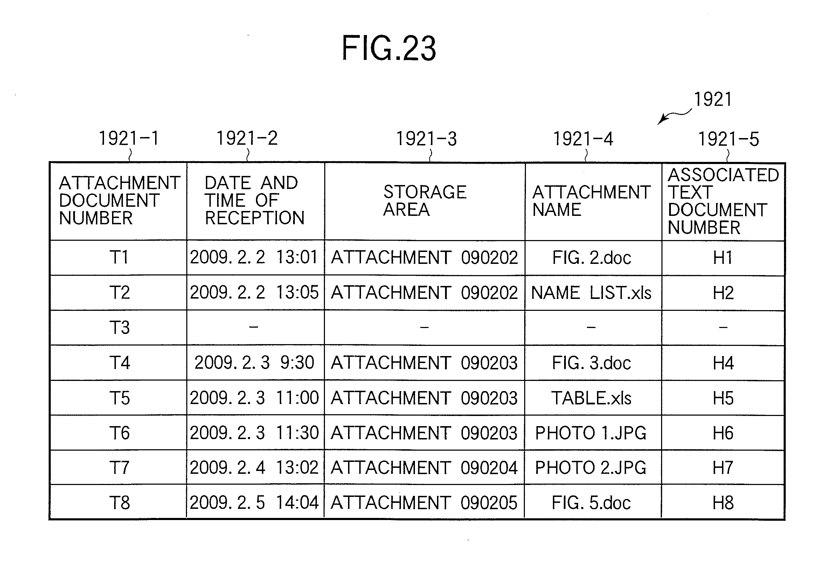

Fig. 23 illustrates an exemplary configuration of the attachment information table 1921.

The attachment information table managing section 192 performs list maintenance of the attachment information table 1921. The attachment information table 1921 includes the following fields for each attachment: the attachment document number 1921-1, a date and time of reception 1921-2, a storage area 1921-3, an attachment name 1921-4, and an associated text document number 1921-5. This configuration allows the user to know the relation between email text files and the associated attachments.

The number in the attachment document number 1921-1 is consecutively counted up every time a new attachment is added. The time of reception 1921-2 holds the date-and-time information at which the email is received and attachment is created. The storage area 1921-3 holds the combination of the date-and-time information with the folder name registered with the file destination registering section 18. For example, if an email is received on February 2, 2009, the storage area 1921-3 stores "TEXT 090202." The attachment name 1921-4 holds the name of attachment. The associated text document number 1921-5 and the text document number 1911-1 of the text information table 1911 holds an identical number for each email. If a received email has no attachment, the associated text document number 1921-5 holds "0" which indicates that the received email has no attachment.

Referring back to Fig. 19, the control and display unit 21 includes an user interface section 211 through which a user inputs a variety of commands and data in the form of characters and numerals, and a liquid crystal display (LCD) which displays to the user a variety of information including a command menu and obtained data.

The user interface section 211 includes a variety of input keys with which the user inputs a variety of information, a stop key 2113 that receives a command to stop the operation of the MFP 30, an address key 2114 that receives the destinations of emails specified by the user, and a file-name modifying key 2115 that accepts changes in the file name.

The reading section 22 reads the image of a document placed on a document supporting portion 221, constituted of a glass platform by means of an optical reading means, for example, a charge coupled device (CCD) image sensor. The reading section 22 then generates image data based on the information obtained by the optical reading means. The reading section 22 includes an automatic document feeder 222 that feeds a plurality of sheets of a document, and a discharging section 223 that discharges the sheets of the document after reading.

The printing section 23 is, for example, an electrophotographic print engine, and is capable of printing an image on a print medium fed from a paper cassette 31 (Fig. 18) based on the image data read in through the reading section 22 or image data inputted from an outside apparatus. The print medium is discharged onto a stacker 32 after printing.

### {Operation of MFP}

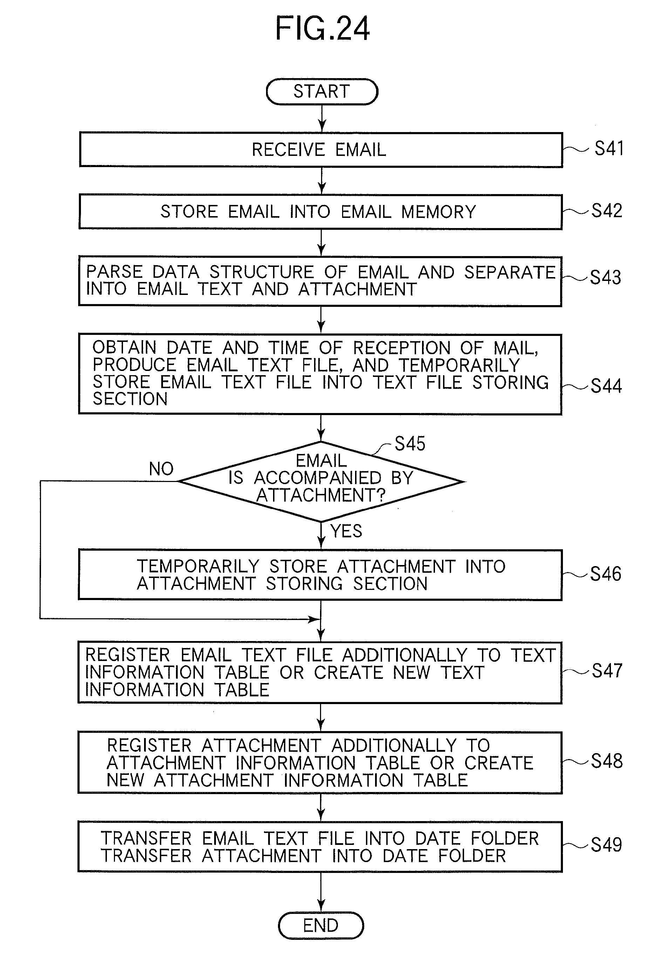

Fig. 24 is a flowchart illustrating the operation of the email management apparatus 10.

The operation of the MFP 30 of the above-described configuration will be described with reference to Fig. 24. The configuration of the MFP 30 is substantially the same as that of the email management apparatus according to the first embodiment and therefore a description will also be made with reference to Fig. 2B as required. A description will be given of a case in which an email is received, assuming that the name of a destination root folder of the server 100 has been registered (e.g., destination of an email text file is "TEXT" and destination of attachment is "ATTACHMENT".)

Once the MFP 30 starts an email receiving processing, an email receiving section 142 of the communication section 14 receives an email (S41) and stores the received email into the email memory 15 (S42).

Once the received email has been stored into the email memory 15, a separating section 161 reads the mail from the email memory 15 and parses the data structure of the email, thereby determining whether the received email is accompanied by an attachment and then separating the email into email text data and attachment data if the email is accompanied by an attachment (S43).

A date-and-time parser 164 obtains the date and time of reception of an email. The text file processing section 1621 of the text file creating section 162 produces an email text file and then attaches a text file name to the email text file, and temporarily stores the email text file having the text file name into the into the text file storing section 1622 (S44).

If an email is accompanied by an attachment (YES at S45), the separating section 161 temporarily stores the email together with the date and time of reception obtained by the date-and-time parser 164 into an attachment storing section 163. If the attachment has already been assigned its attachment name, the email is stored together with that attachment name (S46).

The text information table managing section 191 of an associating section 19 (Fig. 19)_either additionally registers the email text file with the text information table 1911 or creates a new text information table 1911 based on the email text file, the date and time of reception of the email, and the root folder of a registered destination or (S47).

The attachment information table managing section 192 of the associating section 19 then either additionally registers the attachment with the attachment information table 1921 or creates a new attachment information table 1921 based on the date and time of reception of the email and the root folder of a registered destination (S48).

Referring to Fig. 19 and Fig. 2B, the date folder creating section 173 of the file transfer controller 17 (Fig. 19, Fig. 2B) refers to the text information table 1911, and creates, on a date-by-date basis, the data-and-time folder 1001-1 at a level below the text root folder 1001 in a memory (not shown) of the server 100 (Fig. 2B). Subsequently, a text file transferring section 171 transfers the email text file to the date folder 1001-1. The date folder creating section 173 refers to the attachment information table 1921, and creates, on a date-by-date basis, the date folder 1002-1 at a level below the attachment root folder 1002 of the memory (not shown) of the server 100 (Fig. 2B). The attachment transferring section 172 then transfers the attachment to the created date folder 1002-1 (S49).

As described above, an email is separated into the email text file and the attachment, the email text file being stored into the date folder 1001-1 and the attachment being stored into the date folder 1002-1. Thus, the user can browse the text information table 1911 and attachment information table 1921 using a browser or a file browsing function of the operating system (OS). Since the email text file and the attachment are organized in terms of folders for each date, a user only needs to perform a search of the date folder 1001-1 to find his desired email text file or a search of the date folder 1002-1 to find his desired attachment. This increases the search speed of the email text file and the attachment. Conventionally, if a user remembers only a part of the file name, which is a "keyword", of the attachment, he cannot search for his desired attachment. Instead, a conventional apparatus requires the user to search the title or source name of the email, and then open the email to perform a search for an attachment. In contrast, the present embodiment is configured such that the date folder 1002-1 below the attachment root folder 1002 stores only the attachments; therefore the user can perform a search of the date folder to find his desired attachment using only a part of the attachment name as a keyword.

### Modification 2-1

A multi function peripheral (MFP) 30-1 according to a modification 2-1 will be described which manages the opened/unopened status of attachments by a user and displays to the user the status of attachments i.e., opened and unopened attachments.

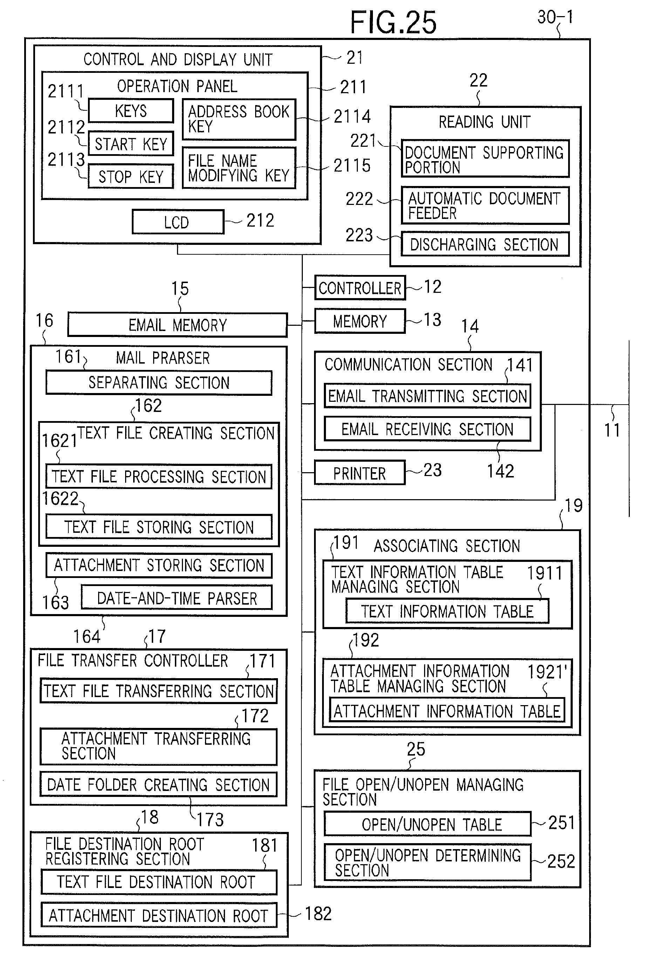

Fig. 25 is a block diagram illustrating the functionality of a multi function peripheral (MFP) 30-1 that implements the functionality of the modification 2-1.

The configuration of the MFP 30-1 is the same as that of the MFP 30 according to the third embodiment. Elements similar to those of the third embodiment will be given the same reference numerals, and a description will be given only of a portion different from the third embodiment. As is clear from Fig. 25, the MFP 30-1 differs from the MFP 30 in that a file open/unopen managing section 25 is added.

The file open/unopen managing section 25 includes an open/unopen table 251 that indicates the opened/unopened status of attachments, and an open/unopen determining section 252. The open/unopen determining section 252 refers to the open/unopen table 251 to determine the status of attachments and then notifies the attachment information table managing section 192 of the opened/unopened status of attachments.

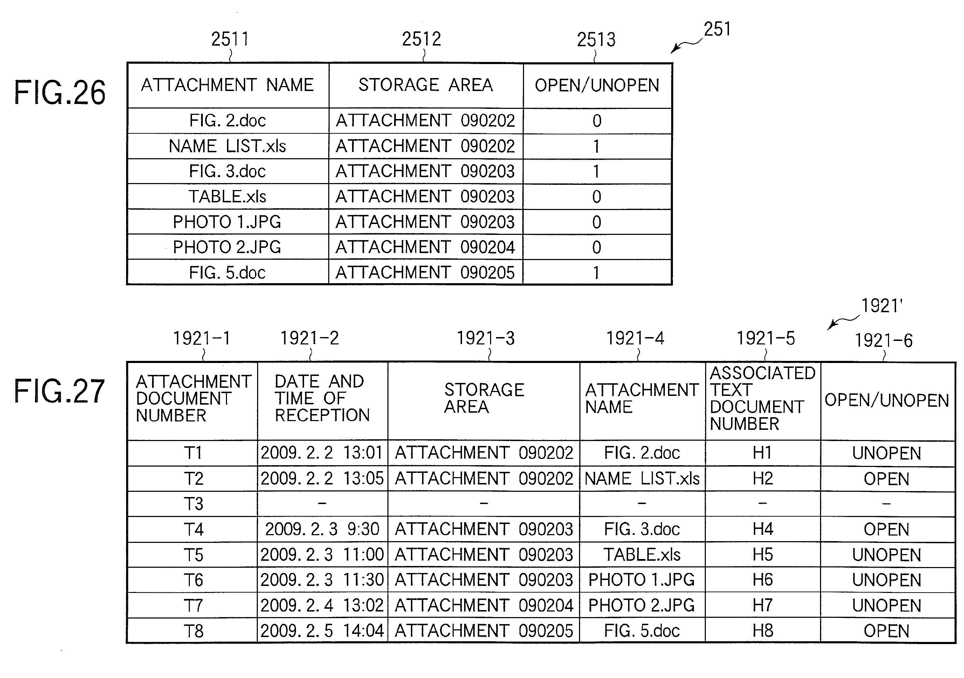

Fig. 26 illustrates an exemplary configuration of the open/unopen table 251.

The open/unopen table 251 includes the following fields for each attachment: an attachment name 2511, a storage area 2512, and an open/unopen event 2513. The attachment name 2511 and the storage area 2512 correspond to the attachment name 1921-4 and storage area 1921-3, respectively, of the attachment information table 1921. The value of the open/unopen event 2513 indicates the opened/unopened status of attachments. When the user opens an attachment, the file open/unopen managing section 25 sets the value of the open/unopen event 2513 to 1. If an attachment has not been opened yet by the user, the value of the open/unopen event 2513 is 0.

If the value of the open/unopen event 2513 is 1, the open/unopen determining section 252 determines that the attachment has been opened, and notifies the attachment information table managing section 192 of the contents of the attachment name 2511 and the storage area 2512 that correspond to the attachment file.

Fig. 27 illustrates an attachment information table 1921' according to the modification 2-1.

The attachment information table 1921' includes an open/unopen event 1921-6. Upon reception of a notification from the open/unopen determining section 252, the attachment information table managing section 192 sets the open/unopen event 1921-6, which corresponds to the notified attachment name, to YES which indicates that the attachment has been opened. If no notification has been received from the open/unopen determining section 252, the open/unopen event 1921-6 remains NO which indicates that the attachment has not been opened yet.

As described above, the attachments that have not been opened yet by the user and those that have been opened may be highlighted by different colors or different background patterns instead of creating the open/unopen even 2513 in the attachment information table 1921, instead of providing the field of open/unopen event 1921-6. For example, attachments that have not been opened yet may be highlighted by white and those that have been opened already may be highlighted by a shaded area, so that the colors or patterns of the attachment names are changed according to the determination of the open/unopen determining section 252.

The modification permits the user to browse the attachment information table 1921 to know whether attachments have been opened. Therefore, if the user wants to search attachments, he can select the group of attachments that have been opened and the group of attachments that have not been opened yet, thereby narrowing down the search.

### Modification 2-2

An MFP 30-2 according to a modification 2-2 will be described which manages the opened/unopened status of attachments and restricts the user actions such as permission of opening of attachments, prohibition of the opening of attachments, warning indicative of unopened attachments, and the opening of a corresponding mail text.

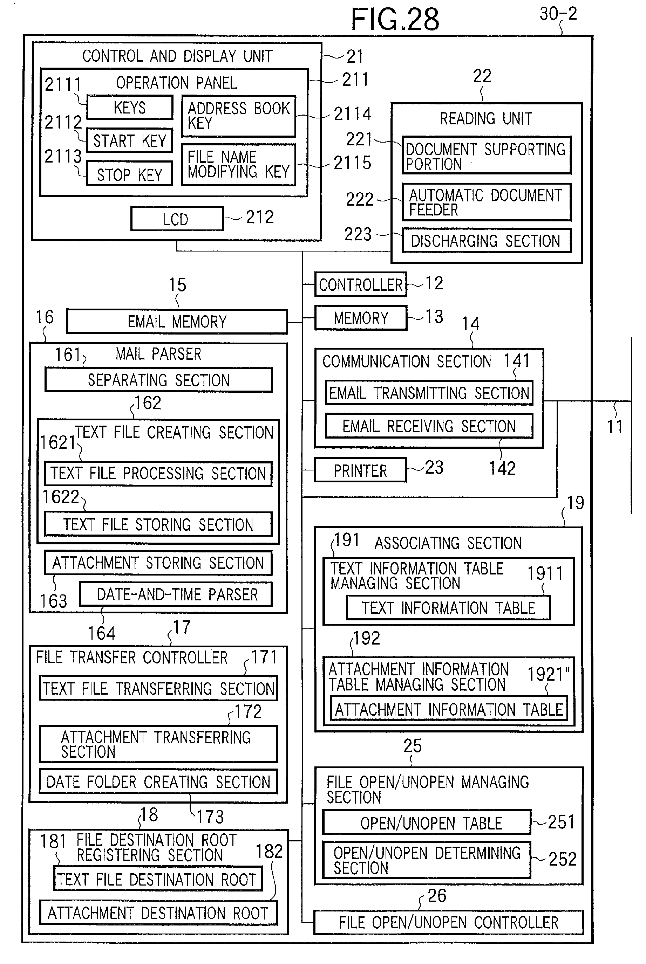

Fig. 28 illustrates the functionality of an MFP 30-2 that implements the functionality of the modification 2-2.

A description will be given of portions different from the MFP 30-1. Elements similar to those of the modification 2-1 have been given the same reference numerals and their description is omitted. Referring to Fig. 28, the MFP 30-2 differs from the MFP 30-1 in that a file open/unopen controller 26 is employed.

When the user attempts to open an attachment, the file open/unopen controller 26 inquires the open/unopen determining section 252 of the opened/unopened status of the attachment. Then, the file open/unopen controller 26 restricts access to the attachment in accordance with the determination by the open/unopen determining section 252.

Specifically, upon reception of an inquiry from the file open/unopen controller 26, the open/unopen determining section 252 refers to the open/unopen table 251, thereby determining whether a inquired attachment has been opened and then notifying the file open/unopen controller 26 of the determination. For example, if the value of the open/unopen event 2513 has been set to "1," the open/unopen determining section 252 determines that the attachment has been opened by the user and then notifies the file open/unopen controller 26 of the opened status of the attachment. Upon reception of the notification, the file open/unopen controller 26 permits the opening of attachment. If the value of the open/unopen event 2513 has been set to "0," the open/unopen determining section 252 determines that the attachment has not been opened yet, and then notifies the file open/unopen controller 26 of the unopened status of the attachment. Upon reception of the notification, the file open/unopen controller 26 may display to the user that the attachment has not been opened yet.

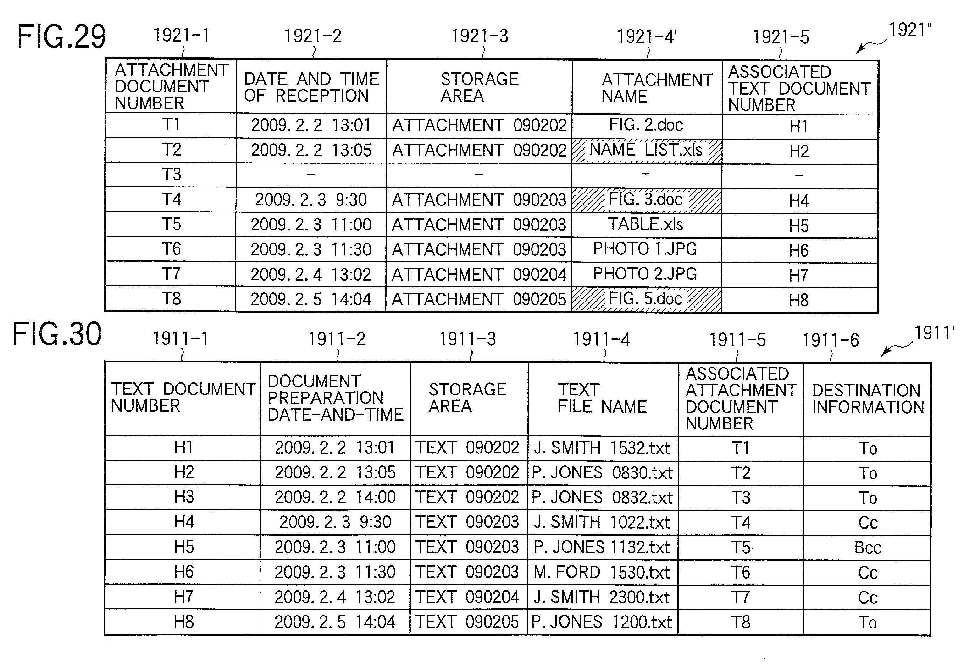

Fig. 29 illustrates an attachment information table 1921".

The attachment information table 1921" may be configured such that the file open/unopen controller 26 instructs the attachment information table managing section 192 to shade the attachment name that correspond to that of an attachment that has not opened yet. Alternatively, for example, the file open/unopen controller 26 may instruct the attachment information table managing section 192 to forcibly open a corresponding email text file and refer to the text. Yet alternatively, the file open/unopen controller 26 may perform control to inhibit the opening of the attachment, in which case, if the corresponding email text file has been opened, a message "This attachment remains unopened" may be displayed before

permitting the opening of the attachment.

As described above, the modification 1-2 prevents an unopened attachment from being opened inadvertently. If the attachment is a hacker email, the attachment is prevented from being executed beforehand if the attachment is an executable file. Since the modification 1-2 allows the user to check the email text for the opening of the attachment, the modification 1-2 may help the user determine whether the attachment may be opened. Therefore, it may be helpful in determining whether the attachment is malicious.

### Modification 2-3

An MFP according to modification 2-3 will now be described which determines which of To, Cc, and Bcc the destination of an email is and causes the text information table or the attachment information table 1921 to list these destinations.

The configuration of the MFP according to the modification 2-3 is substantially the same as that of the MFP 30 according to the third embodiment, and its detailed description is omitted. The email parser according to the modification 2-3 parses the destination information of a received email to determine which of To, Cc, and Bcc the destination of the received email is. Then, the email parser notifies the text information table managing section and the attachment information table managing section of the determined destination.

Fig. 30 illustrates a text information table 1911'.

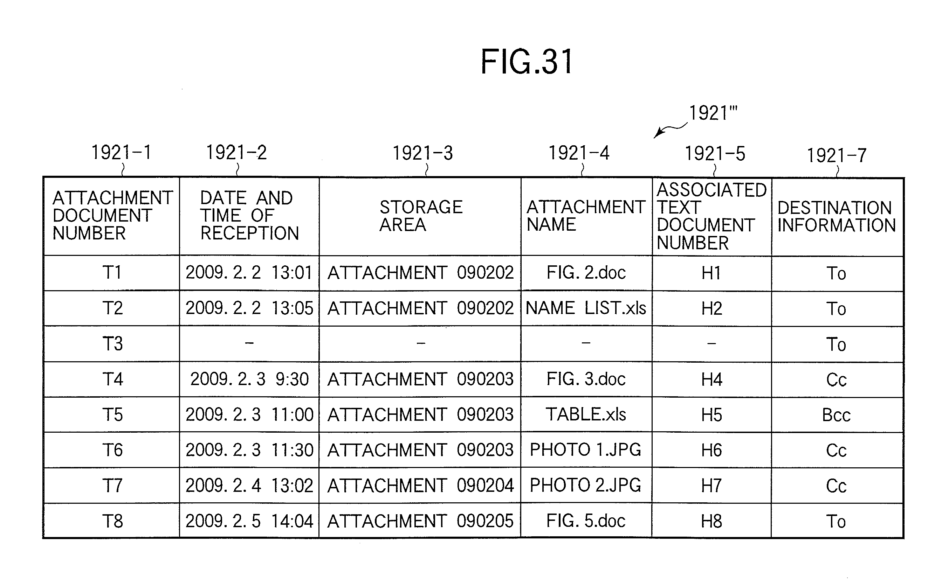

Fig. 31 illustrates an attachment information table of the modification 2-2.

Upon reception of the notification, the text information table managing section creates a text information table 1911' that has a field of destination information 1911-6 in which one of To, Cc, and Bcc is entered. Also, the text information table managing section creates a text information table 1921"' that has a field of destination information 1921-7 in which one of To, Cc, and Bcc is entered.

As described above, when an email is received, the modification 2-3 permits the user to know which of To, Cc, and Bcc the email received with an attachment is set to. Therefore, the MFP according to the modification 2-3 may be helpful in determining the type and importance of the attachment.

### Fourth Embodiment

The third embodiment has been described in terms of the server 100 on the network which is a storage destination of the email text file and the attachment separated from the received email. A fourth embodiment differs from the third embodiment in that the email management apparatus has a large capacity memory 20 for storing email text files and attachments.

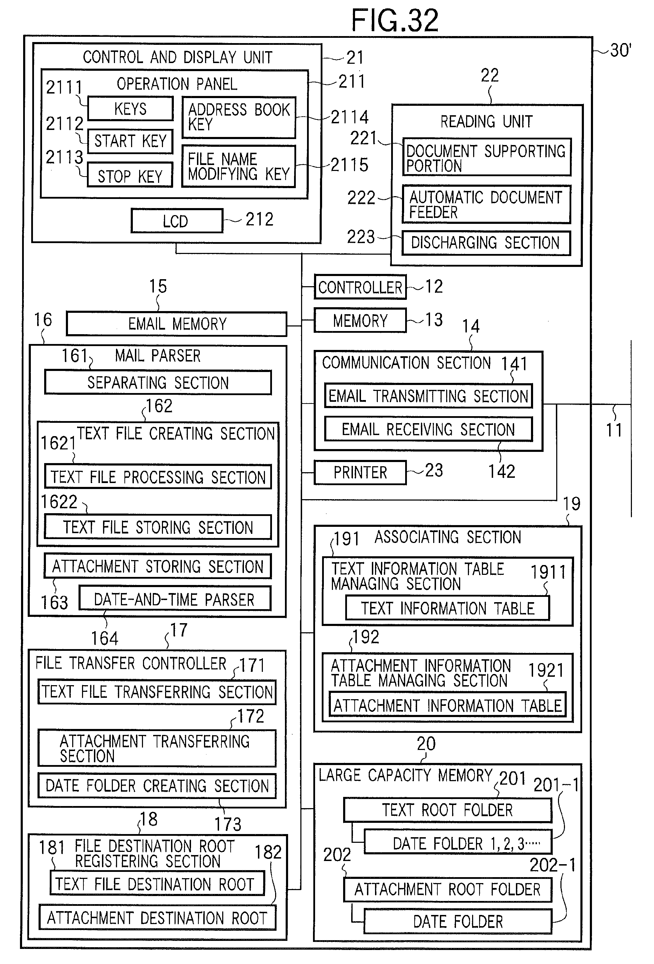

Fig. 32 is a functional block diagram illustrating a multi function peripheral (MFP) 30' according to the fourth embodiment.

The configuration of the MFP 30' is substantially the same as that of the MFP 30 according to the third embodiment. Elements similar to those of the third embodiment have been given the same reference numerals. As is clear from Fig. 32, the MFP 30' includes the large capacity memory 20 in addition to the configuration of the MFP 30 according to the third embodiment.

The large capacity memory 20 includes a non-volatile memory of, for example, an HDD, and has the same configuration as the server 100 according to the third embodiment. The large capacity memory 20 includes a text root folder 201 which is the destination of an email text file, a date folder 201-1 created by a date folder creating section 173 at a level below the text root folder 201, an attachment root folder 202 which is the destination of the attachment, and a date folder 202-1 created by the date folder creating section 173 at a level below the attachment root folder 202.

The MFP 30' of the above-described configuration is capable of managing the email text files and associated attachments without the need for an outer server.

### {Operation of MFP}

The operation of the MFP 30' of the above-described configuration will be described. The fourth embodiment will be described with respect to a case in which an email is received, assuming that the large capacity memory 20 has a destination root folder created therein. Here, the root folder name for the destination of the email text file is "TEXT" and the root folder name for the destination of the attachment is "ATTACHMENT".

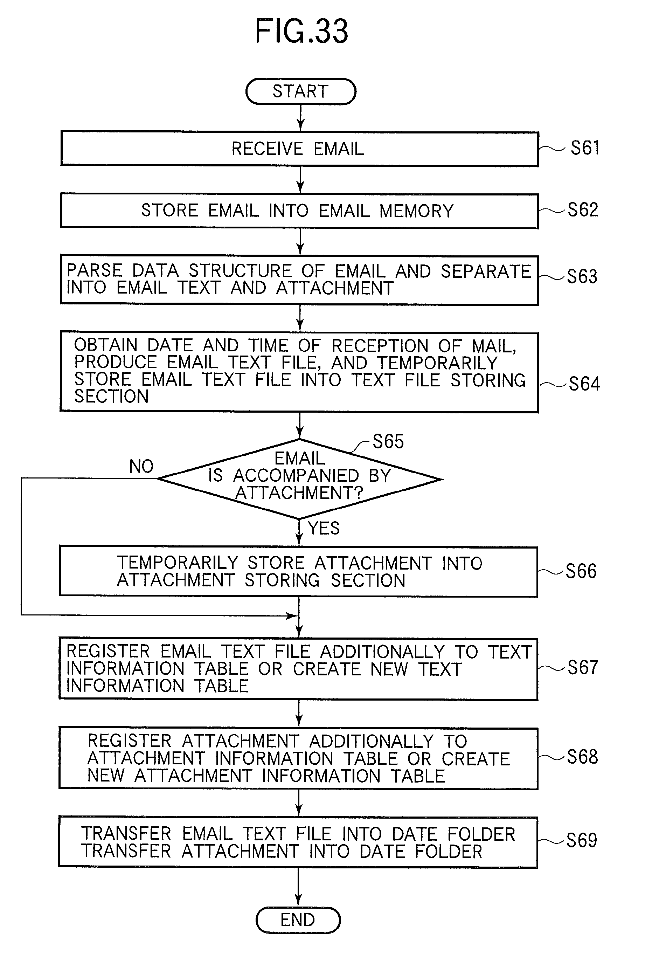

Fig. 33 is a flowchart illustrating the operation of the MFP 30'.

The operation of the MFP 30' will be described with reference to Fig. 33 and Fig. 15B (second embodiment), as required.

The MFP 30' begins to receive an email, an email receiving section 142 of a communication section 14 receives an email (S61) and stores the received email into the email memory 15 (S62).

Once the received email has been stored into the email memory 15, a separating section 161 of an email parser 16 reads the mail from the email memory 15, and parses the data structure, thereby determining whether the received email is accompanied by an attachment and then separating the email into email text data and attachment data if the email is accompanied by an attachment (S63).

A date-and-time parser 164 obtains the date and time information on reception of an email. A text file processing section 1621 of a text file creating section 162 produces an email text file and then attaches a text file name to the email text file, and then temporarily stores them into the text file storing section 1622 (S64).

When an email is accompanied by an attachment (YES at S65), the separating section 161 temporarily stores the email together with the date information and time information, obtained by the date-and-time parser 164, into an attachment storing section 163. If the attachment has already been assigned its attachment name, the email is stored together with that attachment name

(S66).

The text information table managing section 191 of an associating section 19 additionally registers the email text file with text information table 1911 or creates a new text information table 1911 based on the email text file, the date and time information on the reception of the email, and the root folder of a registered destination (S67).

The attachment information table managing section 192 of the associating section 19 then creates an attachment information table 1921 or additionally registers the attachment, based on the date and time information on the reception of the email and the root folder of a registered destination (S68).

The date folder creating section 173 of the file transfer controller 17 refers to the text information table 1911 to create, on a date-by-date basis, the date folder 201-1 (Fig. 15B) at a level below the text root folder 201 in the large capacity memory 20. A text file transferring section 171 then transfers the email text file to the date folder 201-1. The date folder creating section 173 refers to the attachment information table 1921 and creates, on a date-by-date basis, the date folder 202-1 (Fig. 15B) at a level below the attachment root folder 202 in the large capacity memory 20. An attachment transferring section 172 then transfers the attachment to the created date folder 202-1 (S69).

As described above, the MFP 30' according to the fourth embodiment performs the management of the email text file and associated attachments without the need for an outer server, improving convenience of the user.

The fourth embodiment may also employ the configurations of the modifications 2-1, 2-2, and 2-3 of the third embodiment. Employing the configurations of the modifications 2-1, 2-2, and 2-3 provides additional effects derived from these modifications.

The present invention has been described with respect to a case in which email texts and attachments are independently managed. The invention is not limited to this, and may be configured so that the email texts and attachments are connected through a hyper link, thereby further increasing search efficiency.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An email management apparatus comprising:
an email receiving section (14) for receiving an email via a network;
a separating section (16) for separating the email into an attachment and an email text and producing attachment data based on the attachment and email text data based on the email text;
an associating section (19) for associating the email data with the attachment data; and
a transfer section (17) for transferring the attachment and the email text either to an internal memory or to an external memory.

2. The email management apparatus according to claim 1 further comprising a file open/unopen managing section (25) that manages an opened status and an unopened status of the attachment, and then notifies the associating section (19) of the opened status and the unopened status.

3. The email management apparatus according to claim 2 further comprising a file open/unopen controller (26) for making a determination whether the attachment should be opened, the determination being made based on the opened status and the unopened status of the attachment.

4. The email management apparatus according to any one of claims 1 to 3, wherein the separating section (16) creates an email text file by attaching a name to the email text data, the name being based on information on a sender of the email and a date and time at which the email text data is produced.

5. The email management apparatus according to any one of claims 1 to 4, wherein the associating section (19) associates the email data and the attachment data with a document number, and performs list management of the email data and the attachment data.

6. The email management apparatus according to any one of claims 1 to 5, wherein the external memory is a server and the transferring section transfers the email text and the attachment to the server.

7. The email management apparatus according to any one of claims 1 to 6, wherein the transferring section transfers the email text and the attachment to the internal memory (20).

8. The email management apparatus according to claim 1, wherein the email receiving section (14) obtains information on a sender of the email and notifies the associating section (19) of the information on the sender of the email.

9. A multi function peripheral including an image forming section configured to reproduce an image read from a document and to produce the content of an email received from an outside apparatus, wherein the multi function peripheral comprising email management apparatus according to any one of claims 1 to 8.

10. A method of communicating emails, comprising:
receiving an email via a network;
separating the email into an attachment and an email text and then producing attachment data based on the attachment and email text data based on the email text;
associating the email text data with the attachment data; and
transferring the attachment and the email text either to an internal memory (20) or to an external memory (100).

11. The method according to claim 10, wherein the separating comprises:
creating an email text file by attaching a name to the email text data, the name being based on information on a sender of the email and a date and time at which the email text data is produced.

12. The method according to claim 10, wherein the associating comprises:
associating the email data and the attachment data with a document number; and
performing list management of the email data and the attachment data.

13. The method according to claim 10,
further comprising transferring the email text and the attachment to the external memory (100).

14. The method according to claim 10,
further comprising transferring the email text and the attachment to the internal memory (20).
